# EUROPÄISCHE PATENTSCHRIFT

(11) **EP 0 877 718 B1**
(45) Veröffentlichungstag und Bekanntmachung des Hinweises auf die Patenterteilung: **18.06.2003**
(21) Anmeldenummer: 97904359.3
(22) Anmeldetag: 31.01.1997
(51) Int. Cl.: C04B 28/04, C04B 18/12

(54) **BINDEMITTELMISCHUNG ZUR HERSTELLUNG MINERALISCHER HÜTTENSANDFREIER DICHTWANDMASSEN UND VERFAHREN ZUR HERSTELLUNG DIESER BINDEMITTELMISCHUNG**
BINDING AGENT MIXTURE FOR THE PREPARATION OF MINERAL SLAG-SAND FREE MATERIAL FOR RETENTION WALL AND A PROCESS FOR PREPARATION OF THIS BINDING AGENT MIXTURE
MELANGE DE LIANTS POUR LA PRODUCTION D'UN MATERIAU MINERAL EXEMPT DE SABLE-LAITIER POUR RIDEAU ETANCHE, ET PROCEDE DE PRODUCTION D'UN TEL MELANGE DE LIANTS

(30) Priorität: 02.02.1996 DE 19603805
(43) Veröffentlichungstag der Anmeldung: 18.11.1998
(73) Patentinhaber: Rohrbach Zement GmbH & Co. KG, 72359 Dotternhausen (DE)
(72) Erfinder: ROHRBACH, Gerhard, D-72359 Dotternhausen (DE); DANILEJKO, Jurij, D-72336 Balingen (DE); ZIMMERMANN, Manfred, D-72359 Dotternhausen (DE)
(74) Vertreter: Körber, Wolfhart, Dr. rer.nat.
(86) Internationale Anmeldenummer: EP9700428
(87) Internationale Veröffentlichungsnummer: WO97028098

(56) Entgegenhaltungen:
- EP-A- 0 397 963
- CH-A- 686 435
- DE-A- 4 322 048
- DE-C- 419 561
- FR-A- 1 287 707
- US-A- 1 644 965
- US-A- 4 375 985
- DATABASE WPI Section Ch, Week 8408 Derwent Publications Ltd., London, GB; Class A93, AN 84-046668 XP002030916 & JP 59 008 656 A (KAO CORP) , 17.Januar 1984

## Beschreibung

Die Erfindung betrifft eine Bindemittelmischung zur Herstellung mineralischer Dichtwandmassen oder dergleichen nach dem Oberbegriff des Anspruches 1 und ein Verfahren zur Herstellung dieser Bindemittelmischung.

Derartige Bindemittelmischungen werden bei der Herstellung von Untergrundabdichtungen zur Verminderung der Wasserverluste von Speichern und Wasserläufen, zur Vergrößerung der Standsicherheit von Wasserbauwerken, zur Verminderung des Wasserandranges in Baugruben bzw. weitreichender Grundwasserabsenkungen, zur Umschließung von Altdeponien und grundwassergefährdeter Produktionsstätten und zur Schaffung von Trinkwasser- und Wärmespeichern verwendet.

Hierzu werden senkrechte Dichtwände, die in der Regel in gering wasserdurchlässige Bodenschichten oder künstlich hergestellte Dichtungssohlen eingebunden sind, in den Boden eingebracht. Derartige Dichtwände werden insbesondere als sogenannte Schlitzwände ausgeführt.

Zum Aushub des Schlitzes werden verschiedene Technologien angewandt, wie beispielsweise das Scrape-, Bohrfräs- oder Bohrschlitzverfahren.

Beim Aufbau der Schutzwände wird zwischen dem Einphasen- und dem Zweiphasenverfahren unterschieden. Bei beiden Verfahren werden zuerst mit Hilfe von Schlitzwandfräsen, Schlepplöffel/Hydrautikgreifern oder Schlitzwandgreifern die Bodenöffnungen bis zu Tiefen von 50 m und mehr hergestellt.

Beim Zweiphasenverfahren wird zur Abstützung der Erdwände durch hydrostatischen Druck eine Stützflüssigkeit, wie zum Beispiel eine reine Bentonit-Suspension, eingefüllt. In einem zweiten Schritt wird das eigentliche Dichtungsmaterial, zum Beispiel (Erd-)Beton oder bentonithaltiger Beton durch Verdrängung der Stützflüssigkeit eingebracht.

Beim Einphasenverfahren hingegen wird anstelle der Stützflüssigkeit eine Dichtwandmasse, wie zum Beispiel eine Bentonit-Zementsuspension, verwendet, die nach Beendigung des Bodenaushubs im Schlitz verbleibt und langsam aushärtet. Die Dichtwandmasse ist zum Beispiel eine selbsthärtende thixotrope Suspension. Im Zweiphasenverfahren werden also Stütz- und Dichtflüssigkeit getrennt voneinander in zwei Schritten eingebracht, wohingegen im Einphasenverfahren die Stütz- und Dichtfunktion von einer Suspension erfüllt wird.

Vorteilhaft an dem Einphasenverfahren ist, daß ein durchgehend homogener fugenloser Dichtwandschlitz entsteht. Weiterhin ist das Einphasenverfahren wirtschaftlicher, da die Stützflüssigkeit des Zweiphasenverfahrens nicht in einem gesonderten Verfahrensschritt von dem eigentlichen Dichtungsmaterial verdrängt werden muß.

An die flüssige Dichtwandmasse, das heißt an die Frischsuspension, werden die folgenden Anforderungen gestellt: Bevor sie ausgehärtet ist, muß sie eine geringe Viskosität aufweisen, damit sie pumpfähig ist und beim Aushub möglichst schnell aus dem Schlitzwandgreifer abfließt. Weiterhin muß die Suspension stabil sein, das heißt, sie soll sich im Laufe der Zeit möglichst wenig entmischen. Vor allem müssen das Bindemittel und die mineralischen Füllstoffe weitestgehend in Schwebe gehalten werden. Drittens muß die flüssige Dichtwandmasse, wie zum Beispiel eine Bentonit-Zementsuspension, vergleichbare Eigenschaften wie Bentonit-Suspensionen nach DIN 4126 haben, die in der Schlitzwandtechnik als Stützsuspension verwendet wird. Die Eigenschaften der reinen Bentonit-Suspension dürfen durch die Zementzugabe nicht wesentlich verschlechtert werden. So muß die Suspension eine Fließgrenze aufweisen und an den Erdwänden einen Filterkuchen bilden, damit über dessen Membranwirkung der volle hydrostatische Stützdruck übertragen werden kann. Zur Sicherstellung der Membranwirkung darf die Suspension nicht oder nur geringe Strecken in den Boden eindringen. Viertens soll das Erstarren des Zementes nicht vor Beendigung des Aushubs einsetzen, da sonst die Gefahr besteht, daß die Hydratation durch die ständige Bewegung der Schlämme beim Baggerbetrieb gestört wird und es dadurch zu erheblichen Festigkeitsverlusten und einer erhöhten Wasserdurchlässigkeit kommt.

Die erhärtete Dichtwandmasse muß folgende Anforderungen erfüllen: Sie muß erstens eine Mindestdruckfestigkeit aufweisen. Dabei ist anzustreben, daß die Festigkeit des umgebenden Bodenmaterials erreicht wird. Als Mindestdruckfestigkeit werden in der Praxis 0,3 MPa als ausreichend angesehen. Da die Hauptfunktion der Wand eine möglichst geringe Wasserdurchlässigkeit ist, muß auf die Prüfung dieser Eigenschaft und darauf einflußnehmender Faktoren besonderer Wert gelegt werden. Die Wasserdurchlässigkeit darf sich durch die anstehenden Bodenverhältnisse und dem Chemismus des Grundwassers nicht negativ verändern.

Die Dichtwandmasse soll drittens dauerhaft plastisch bleiben, um sich unter Belastungen möglichst rissefrei verformen zu können. Außerdem muß die Erosionssicherheit der Wand in zweierlei Hinsicht gewährleistet sein. An der Grenzfläche Wand/Boden muß vermieden werden, daß einzelne Partikel aus der Dichtwand durch vorbeiströmendes Wasser gelöst werden und es sukzessive bei dieser Erosion zu einer vollständigen Zerstörung der Wand kommt. Außerdem dürfen sich eventuell vorhandene Fehlstellen durch Erosion im Laufe der Zeit nicht aufweiten.

Das Problem bei der Entwicklung geeigneter Dichtwandmassen ist, die genannten sich zum Teil widersprechenden Anforderungen möglichst optimal zu erfüllen. Bei der Herstellung solcher Dichtwandmassen wird zwischen einer einstufigen und einer zweistufigen Herstellung unterschieden. Bei der einstufigen Herstellung werden sämtliche Komponenten der Dichtwandmasse trocken vermischt und als Fertigmischung angeliefert. In der DE-PS 36 33 736 sind beispielsweise solche Trockenmischungen bekannt, die im wesentlichen aus quellfähigen Tonmineralien (Bentonit), Hochofenschlacke und Anreger für die Hochofenschlacke bestehen und die bis zu 25 Gew.-Anteile inerte Füllstoffe aufweisen können. Bei der Herstellung der Dichtwandmasse können Zusätze beigegeben werden, die das Fließverhalten während des Mischvorganges, die Konsistenz oder das Abbinden beeinflussen. Der Einfluß der Thixotropie soll bei den dort beschriebenen Trockenmischungen geringer sein als bei herkömmlichen Massen.

Ferner wird in der DE-OS 38 00 776 eine optimierte Bindemittelmischung beschrieben, die zu den bereits erwähnten Bestandteilen zusätzlich reaktive Kieselsäure (dispers) verwendet und zusammen mit dem Hüttensand, das heißt der glasig erstarrten Hochofenschlacke und dem Anreger für diesen, insbesondere Portlandzement-Klinker, gemeinsam vermahlen wird. Dadurch ist es möglich, eine feststoffreiche Bindemittelmischung zu schaffen, die eine lange Verarbeitbarkeit der Frischmasse bei schwachem bis keinem thixotropen Verhalten, hohe Dichtigkeit und hohe Stabilität der Dichtwand gegen agressive Wässer gewährleistet.

Eine weitere Bindemittelfertigmischung wird in EP 0 239 740 B1 beschrieben, bei der anstelle von Portlandzement-Klinker Kalziumhydroxid als hydroxylionenbildender Anreger für die Hochofenschlacke verwendet wird und insbesondere die Feststoffe vorzugsweise bereits als feingemahlene Trocken- oder Fertigmischung eingesetzt werden.

Die EP 0 397 963 offenbart ein hochreaktives, hydraulisches Bindemittel für die Herstellung von Bau- und Werkstoffen, das besonders rasch aushärtet.

Die US 4,375,985 offenbart eine Zusammensetzung, die verbrannten, verbrauchten Ölschiefer, Ligninsulfat und Wasser enthält, zur Herstellung von festen, belasteten Strukturen.

Die beschriebene einstufige Herstellung von Dichtwandmassen als Fertigmischungen finden vor allem dann Anwendung, wenn die Zusammensetzung der Dichtwandmasse vor der Baumaßnahme bekannt ist und das Bauvorhaben schnell fertiggestellt werden soll.

Desweiteren ist ein zweistufiges Verfahren zur Herstellung geeigneter Dichtwandmassen bekannt. Dabei wird in einer ersten Stufe bauseits aus dem quellfähigen Tonmineral mit Schichtgitterstruktur und Wasser eine Suspension hergestellt. Dieser Mischvorgang wird mittels energiereicher Mischanlagen durchgeführt, um die Schichten der Gitterstruktur mit Hilfe des Wassers voneinander zu trennen und darin möglichst gleichmäßig zu verteilen. Die frisch gemischte Bentonit-Suspension muß in der Regel etwa vier Stunden aufquellen, um die erwünschten thixotropen Eigenschaften zu erhalten. Danach wird in einem zweiten Mischvorgang der Zement zugefügt und die so hergestellte Dichtwandmasse dann in die zu erstellende Schlitzwand gepumpt.

Bei Einsatz von Zementen nach DIN 1164 oder mit bauaufsichtlicher Zulassung lassen sich nicht in allen Fällen die gewünschten Anforderungen an die Verarbeitbarkeit, die Festigkeit und die Wasserdurchlässigkeit erreichen. Dies wird besonders dann beobachtet, wenn die Schlitze sehr tief auszuheben sind und so über lange Zeit das Erstarren des Zements unterdrückt werden muß. In der Praxis wird die Quellfähigkeit der natürlich vorkommenden quellfähigen Tonminerale mit Schichtgitterstruktur, wie zum Beispiel Kalzium-Bentonit, mit Natriumionen, zum Beispiel durch Zugabe von Soda, erhöht. Man spricht in diesem Zusammenhang auch vom Aktivieren des Bentonits. Noch besser geeignet sind hochquellfähige Natrium-Bentonite. Bei der Verwendung üblicher Zemente werden jedoch Kalziumionen freigesetzt, die den bereits angeregten Bentonit wieder schrumpfen lassen.

Es ist daher Stand der Technik, daß hüttensandreiche Zemente, wie zum Beispiel Hochofenzement, zur Herstellung von Dichtwandmassen verwendet werden. Durch den niedrigen sich bildenden Kalziumhydroxidgehalt wird die Quellfähigkeit des angeregten Bentonits nicht negativ beeinflußt, das heißt es erfolgt keine Rückbildung des aktivierten Natrium-Bentonits in Kalzium-Bentonit.

Nachteilig bei der Verwendung von Hüttensand ist, daß er relativ teuer und nicht überall verfügbar ist.

Es ist daher die Aufgabe der vorliegenden Erfindung, eine hüttensandfreie Bindemittelmischung und ein Verfahren zur Herstellung derselben zu schaffen, mit der Dichtwandmassen hergestellt werden können, die eine lange Verarbeitbarkeit der Frischmasse bei schwachem thixotropen Verhalten, geringe Filtratwasserabgabe, erhöhte Festigkeit und hohe Dichtigkeit gewährleistet.

Diese Aufgabe wird durch die im Anspruch 1 gekennzeichnete Bindemittelmischung und die Verfahren der Ansprüche 8 und 9 gelöst. Vorteilhafte Weiterbildungen der Mischung werden in den Unteransprüchen gekennzeichnet.

Erfindungsgemäß gelingt die Herstellung von hüttensandfreien Dichtwandmassen mit Bindemittelmischungen, die gebrannten Ölschiefer, Zement-Klinker und einem geringen Anteil an sulfoniertem Lignin (Ligninsulfonat) aufweisen sowie Bentonit enthalten.

Vorteilhaft sind folgende Trockenmischungen:
a) Gebrannter Ölschiefer nach DIN 1164 Teil 1, Abschnitt 4.5 und ENV 197,
   60 bis 95 Gew.-%, insbesondere 60 bis 80 Gew.-%
b) Portlandzement-Klinker, 5 bis 40 Gew.-%,
   insbesondere 20 bis 40 Gew.-%
c) Ligninsulfonat 0,2 bis 2,0 Gew.-%,
   insbesondere 0,6 bis 0,9 Gew.-%
   Natriumligninsulfonat entzuckert (9% Saccharose).

Bei dem verwendeten Ölschiefer handelt es sich um bitumenarmen Posidonienschiefer mit einem durchschnittlichen Gehalt an organischer Substanz von 10 bis 13%.

Der Ölschiefer wird nach entsprechender Aufbereitung im Wirbelschichtofen gebrannt und anschließend sehr fein vermahlen. Vorzugsweise wird der gebrannte Ölschiefer auf eine Mahlfeinheit, bestimmt gemäß DIN EN 196-6 nach dem Luftdurchlässigkeitsverfahren (Blaine), von 6000 bis 10000 cm²/g gebracht.

Die chemische Zusammensetzung des gebrannten Ölschiefers ist abhängigvon der Geologie der Lagerstätte und dem Brennprozeß. Die Durehschnittsanalyse weist etwa 32% CaO, 36% SiO₂, 11% Al₂O₃, 10% SO₃, 7% Fe₂O₃ und geringe Mengen von MgO, K₂O und Na₂O auf (Werte glühverlustbehaftet).

Der gebrannte Ölschiefer ist selbst hydraulisch erhärtend und kann teilweise durch latent-hydraulische Stoffe ersetzt werden. Ebenso ist es möglich, einen Teil des gebrannten Ölschiefers durch Gesteinsmehle, insbesondere aus Kalkstein oder Kalkmergel, zu ersetzen, sofern dadurch nicht die eingangs erwähnten wichtigen Kennwerte der Dichtwandmasse beeinträchtigt werden.

Der verwendete Portlandzement-Klinker besitzt eine praxisübliche Klinkerphasenzusammensetzung gemäß "VDZ-Zement-Taschenbuch 1984 (Bauverlag)" und ist durch eine wesentlich geringere Mahlfeinheit gekennzeichnet. Vorzugsweise wird er auf eine Mahlfeinheit von 2700 bis 4500 cm²/g nach Blaine gemahlen. Gebrannter Ölschiefer und Portlandzement-Klinker werden erfindungsgemäß gemeinsam oder getrennt vermahlen. Bei getrennter Vermahlung werden beide Komponenten in einer geeigneten Bindemittelmischanlage trocken homogen vermischt.

Aus EP 0 239 740 B1 ist die durchschnittliche Zusammensetzung von Hochofenschlacke bekannt. Sie besteht gewöhnlich aus etwa 35 bis 48% CaO, 30 bis 38% SiO₂, 6 bis 18% Al₂O₃ und geringen Mengen von MgO, MnO und

Eisenoxiden. Diese Zusammensetzung weicht somit wesentlich von der angegebenen Zusammensetzung des gebrannten Ölschiefers ab.

Ferner hat sich die Verwendung des Ligninsulfonats als Natriumsalz, insbesondere wenn dieses entzuckert ist (ca. 9% Saccharose), als vorteilhaft ergeben.

Zur erfindungsgemäßen Herstellung einer hüttensandfreien Dichtwandmasse ist die genaue Dosierung des Ligninsulfonats von Bedeutung, denn die eingangs genannten zu erzielenden Eigenschaften der Dichtwandmasse werden hierdurch sehr stark beeinflußt, So führt eine Konzentration von beispielsweise mehr als 2,0% Natriumligninsulfonat zu einer Verschlechterung der erhärteten Dichtwandmasse, weil die Druckfestigkeiten viel zu niedrig sind, während eine Unterdosierung von weniger als 0,2% Natriumligninsulfonat die Frischsuspensionseigenschaften verschlechtert, das heißt zum Beispiel Marsh-Zeit und Filtratwasserabgabe werden sehr stark erhöht.

Der erfindungsgemäßen Bindemittelmischung zur Herstellung mineralischer hüttensandfreier Dichtwandmassen können zudem Zusatzmittel beigegeben werden, die zum Beispiel die Oberflächenspannung des Wassers senken und damit das Fließverhalten während des Mischvorgangs und die Konsistenz beeinflußen. Desweiteren können Zusatzmittel eingesetzt werden, die Schutzkolloide bilden. Auch Abbindeverzögerer auf den Klinkeranteil des Bindemittels können verwendet werden.

Angesichts der erfindungsgemäßen Wahl der Feststoffkomponenten und ihrer Mengen bzw. der Zusammensetzung der Trockenmischung gelingt es überraschenderweise, mit Bentoniten unterschiedlicher Zusammensetzung eine hüttensandfreie Dichtwandmasse herzustellen, die alle eingangs geforderten Eigenschaften wie lange Verarbeitbarkeit, niedrige Filtratwasserabgabe, hervorragende Pumpfähigkeit und geringe Wasserdurchlässigkeit bei 28 Tage-Festigkeiten in der Größenordnung von 0,8 N/mm², herzustellen. Die Qualität der Dichtwandmasse läßt sich bei bauseitig angelieferten Bentoniten (zweistufiges Herstellungsverfahren) vor Ort leicht an den Bedarf und den Verbrauch anpassen.

Im folgenden soll ein Ausführungsbeispiel einer Bindemittelmischung zur Herstellung einer hüttensandfreien Dichtwandmasse angegeben werden:

Zur Herstellung der hüttensandfreien Dichtwandmasse wurde ein Spezialbindemittel gemischt, das aus 79,1% gebranntem Ölschiefer, 20% Portlandzement-Klinker und 0,9% Natriumligninsulfonat bestand. Dieses Spezialbindemittel wurde bauseits mit zwei verschiedenen (vorgemischten) Bentonitsuspensionen gemischt. Dazu wurden Bentonit und Spezialbindemittel im Verhältnis 1 : 8,75 Gewichtsteilen gemischt, das heißt zum Beispiel 40 kg Bentonit und 350 kg Spezialbindemittel und 880 1 Wasser zugegeben. Der Wasser/Feststoff-Wert betrug somit 2,26.

An der so hergestellten hüttensandfreien Dichtwandmasse wurden folgende Werte im Vergleich zur Null-Probe (ohne Natriumligninsulfonat) gemessen:

| Bentonittypen: CR-4 CV-15 | | | | |
|---|---|---|---|---|
| Parameter | Null-Probe mit CR-4 | Null-Probe mit CV-15 | Spezialbindemittel mit CR-4 und Natriumligninsulfonat | Spezialbindemittel mit CV-15 und Natriumligninsulfonat |
| Suspensionsdichte (kg/dm³) | 1,23 | 1,23 | 1,23 | 1,23 |
| Marsh-Zeit (sek.) | nicht meßbar | nicht meßbar | 46 | 42 |
| Fließgrenze (N/mm²) | nicht meßbar | nicht meßbar | 48,3 | 31,4 |
| Filterwasserabgabe (cm³) | 122 | 125 | 60 | 68 |
| Druckfestigkeit nach 28 Tagen (MPa) | 0,7 | 0,7 | 0,7 | 0,7 |
| Wasserdurchlässigkeit k-Wert nach 28 Tagen (m/sek.) | < 1 x 10⁻¹⁰ | < 5 x 10⁻¹⁰ | < 1 x 10⁻¹⁰ | < 5 x 10⁻¹⁰ |

## Patentansprüche

1. Mineralische Dichtwandmasse, die eine hüttensandfreie Bindemittelmischung, die gebrannten Ölschiefer in Mengen von 60 bis 95 Gew.-%, Portlandzement-Klinker in Mengen von 5 bis 40 Gew.-% und Ligninsulfonat in Mengen von 0,2, bis 2,0 Gew.-% umfaßt, sowie Bentonit enthält.

2. Mineralische Dichtwandmasse nach Anspruch 1, **dadurch gekennzeichnet, daß** die Bindemittelmischung Ligninsulfonat in Mengen von 0,6 bis 0,9 Gew.-% enthält.

3. Mineralische Dichtwandmasse nach einem der vorhergehenden Ansprüche, **dadurch gekennzeichnet, daß** das Ligninsulfonat Natriumligninsulfonat ist.

4. Mineralische Dichtwandmasse nach Anspruch 3, **dadurch gekennzeichnet, daß** das Ligninsulfonat entzuckertes Natriumligninsulfonat mit maximal 9 % Saccharose ist.

5. Mineralische Dichtwandmasse nach einem der vorhergehenden Ansprüche, **dadurch gekennzeichnet, daß** die Dichtwandmasse zusätzliche Additive, zur Senkung der Oberflächenspannung und/oder zur Bildung von Schutzkolloiden und/oder zur Abbindeverzögerung, enthält.

6. Mineralische Dichtwandmasse nach einem der vorhergehenden Ansprüche, **dadurch gekennzeichnet, daß** das Bentonit und Bindemittelmischung im Verhältnis von 1 : 8,75 Gewichtsteilen gemischt werden.

7. Verwendung einer hüttensandfreien Bindemittelmischung aus gebranntem Ölschiefer, Portlandzement-Klinkern und 0,2 bis 2 Gew.-% Ligninsulfonat zur Herstellung einer mineralischen Dichtwandmasse.

8. Verfahren zur Herstellung einer Dichtwandmasse nach einem der Ansprüche 1 bis 6, **dadurch gekennzeichnet, daß** der gebrannte Ölschiefer und der Zement-Klinker getrennt vermahlen werden und zwar der gebrannte Ölschiefer auf eine Mahlfeinheit, bestimmt gemäß DIN EN 196-6 nach dem Luftdurchlässigkeitsverfahren (Blaine), von über 6000 cm²/g, vorzugsweise 7000 cm²/g, und der Zement-Klinker auf eine Mahlfeinheit von 2700 bis 4500 cm²/g nach Blaine, vorzugsweise von 3000 cm²/g nach Blaine, und beide Komponenten in einer geeigneten Bindemittelmischanlage trocken homogen miteinander vermischt werden.

9. Verfahren zur Herstellung einer Dichtwandmasse nach einem der Ansprüche 1 bis 6, **dadurch gekennzeichnet, daß** der gebrannte Ölschiefer und der Zement-Klinker gemeinsam vermahlen werden.

## Claims

1. Mineral retention wall bulk,
which contains
a slag-sand free binding agent mixture, which includes burned oil shale in quantities from 60 to 95 wt%, Portland cement clinker in quantities from 5 to 40 wt% and lignosulphonate in quantities from 0.2 to 2.0 wt%,
and
bentonite.

2. Mineral retention wall bulk according to claim 1, **characterised in that** the binding agent mixture contains lignosulphonate in quantities from 0.6 to 0.9 wt%.

3. Mineral retention wall bulk according to any preceding claim, **characterised in that** the lignosulphonate is sodium lignosulphonate.

4. Mineral retention wall bulk according to claim 3, **characterised in that** the lignosulphonate is desugared sodium lignosulphonate having a maximum of 9% saccharose.

5. Mineral retention wall bulk according to any preceding claim, **characterised in that** the retention wall bulk contains additional additives, for reducing the surface tension and/or for the formation of protective colloids and/or for retarding setting.

6. Mineral retention wall bulk according to any preceding claim, **characterised in that** the bentonite and the binding agent mixture are mixed in a ratio of 1:8.75 parts by weight.

7. Use of a slag-sand free binding agent mixture of burned oil shale, Portland cement clinker and 0.2. to 2.0 wt% lignosulphonate for the manufacture of a mineral retention wall bulk.

8. Method of manufacturing a mineral retention wall bulk according to any of claims 1 to 6, **characterised in that** the burned oil shale and the cement clinker are separately comminuted, the oil shale to a grinding fineness - determined in accordance with DIN EN 196-6 according to the air porosity method (Blaine) - of above 6000 cm²/gm, preferably 7000 cm²/g, and the cement clinker to a grinding fineness from 2700 to 4500 cm²/g according to Blaine, preferably from 3000 cm²/2 according to Blaine, and the two components are mixed with one another, dry, homogeneously, in a suitable binding agent mixing facility.

9. Method of manufacturing a retention wall bulk according to any of claims 1 to 6, **characterised in that** the burned oil shale and the cement clinker are comminuted together.

## Revendications

1. Masse minérale pour parois étanches, qui contient un mélange de liants exempt de sable métallurgique, les schistes bitumineux brûlés à raison de 60 à 95 % en poids, du clinker de ciment Portland à raison de 5 à 40 % en poids et du sulfonate de lignine à raison de 0,2 à 2,0 % en poids, ainsi que de la bentonite.

2. Masse minérale pour parois étanches selon la revendication 1, **caractérisée en en ce que** le mélange de liants contient du sulfonate de lignine à raison de 0,6 à 0,9 % en poids.

3. Masse minérale pour parois étanches selon l'une des revendications précédentes, **caractérisée en ce que** le sulfonate de lignine est du sulfonate de lignine de sodium.

4. Masse minérale pour parois étanches selon la revendication 3, **caractérisée en ce que** le sulfonate de lignine est du sulfonate de lignine de sodium dont le sucre a été extrait qui contient au maximum 9 % de saccharose.

5. Masse minérale pour parois étanches selon l'une des revendications précédentes, **caractérisée en ce que** la masse pour parois étanches contient des additifs supplémentaires destinés à abaisser la tension superficielle et/ou à former des colloïdes de protection et/ou à retarder la prise.

6. Masse minérale pour parois étanches selon l'une des revendications précédentes, **caractérisée en ce que** la bentonite et le mélange de liants sont mélangés dans un rapport de 1 à 8,75 parts en poids.

7. Utilisation d'un mélange de liants exempt de sable métallurgique fait de schiste bitumineux brûlé, de clinker de ciment Portland et de 0,2 à 2 % en poids de sulfonate de lignine, pour fabriquer une masse minérale pour parois étanches.

8. Procédé de fabrication d'une masse pour parois étanches selon l'une des revendications 1 à 6, **caractérisé en ce que** le schiste bitumineux brûlé et le clinker de ciment sont broyés séparément, à savoir le schiste bitumineux brûlé a une finesse de broyage supérieure à 6 000 cm²/gramme, de préférence 7 000 cm²/gramme, déterminée selon DIN EN 196-6 d'après le procédé de perméabilité à l'air (Blaine), et le clinker de ciment a une finesse de broyage de 2 700 à 4 500 cm²/gramme selon Blaine, de préférence de 3 000 cm²/gramme selon Blaine, et les deux composants sont mélangés entre eux de façon homogène à sec, dans une installation appropriée de mélange de liants.

9. Procédé de fabrication d'une masse pour parois étanches selon l'une des revendications 1 à 6, **caractérisé en ce que** le schiste bitumineux brûlé et le clinker de ciment sont broyés ensemble.
